# EUROPEAN PATENT SPECIFICATION

(11) **EP 1 855 363 B1**
(45) Date of publication and mention of the grant of the patent: **12.12.2012**
(21) Application number: 06425320.6
(22) Date of filing: 11.05.2006
(51) Int. Cl.: H02B 1/56

(54) **Cabinet for electrical elements that generate heat to be dissipated**
Schrank für wärmeerzeugende elektrische Bauelemente
Armoire pour composants électriques générant de la chaleur

(43) Date of publication of application: 14.11.2007
(73) Proprietor: I.R.E. Industria Resistenze Elettriche S.R.L., 20124 Milano (IT)
(72) Inventor: Vettorello, Osvaldo, 20020 Arese (IT); Finarelli, Daniele Gianluigi, 20017 Rho (IT)
(74) Representative: Borsano, Corrado

(56) References cited:
- SU-A1- 712 991
- US-A- 5 105 336
- US-A- 5 513 071
- US-A- 6 052 282

## Description

The present invention concerns a cabinet for containing elements arranged on several layers which generate heat to be dissipated, in particular electric resistors, equipped with a structure for dissipating the heat produced by said elements.

A cabinet for containing elements arranged on several layers which generate heat to be dissipated, in particular electric resistors, of a known type performs a structural task and also ensures a determined degree of protection for the thermally and/or electrically active elements that it contains, for example in accordance with standard IEC 529:1989-11.

However, this task is fulfilled at the expense of the properties of dissipating the heat produced by the resistors contained in the cabinet itself.

If the resistors are arranged on several layers, the air flow triggered by the convective movement generally causes the lowest level of the resistors to be struck by the flow of cold air coming from outside, while the higher layers are struck by gradually warmer air as it gathers the thermal power coming from the lower layers.

It is clear that there may be a considerable difference in temperature between the various layers.

Considering that the main structural restraint of the resistors is linked to their operating temperature, the limit of the density of thermal power deposited in the cabinet is therefore determined by the highest temperature reached by the highest layer, which limits the total build-up of power. This represents a limit on the design for both the resistors and the cabinet, the components are thermally stressed in a different way, and the dissipating capacity of the system is tied to the component subjected to the highest thermal stress.

According to US 5.105.336 and also to US 6.052.282, cabinets are known for containing elements arranged on several layers which generate heat to be dissipated, comprising dividing panels or the like between the layers suited to channel flows of cooling fluid (air) so that each layer is crossed by the flow of air triggered by the convective movement coming directly form outside without being struck by the air heated as it passes through the layer below.

The aim of the present invention is therefore to indicate a cabinet for containing elements arranged on several layers which generate heat to be dissipated, in particular electric resistors, equipped with a structure for dissipating the heat produced by said elements, such that each layer of resistors is crossed by a flow of air coming from outside without being struck by the air heated as it passes through other layers of resistors.

*The present invention concerns a cabinet for containing one or more elements arranged on several layers which generate heat to be dissipated, in particular electric resistors, comprising dividing elements between said layers suited to channel flows of cooling fluid so that each layer is crossed by the flow of air triggered by the convective movement coming directly from outside through slots without being struck by the air heated as it passes through the layer below; a hollow area in the form of a flue on the side opposite of said slots, said dividing elements conveying said flows of fluid from said slots to and through said flue; the cabinet being characterized in that one of said dividing elements is arranged on the top of said cabinet to define and form a cover element.*

In particular the present invention concerns a cabinet for containing elements arranged on several layers which generate heat to be dissipated, in particular electric resistors, equipped with a structure for dissipating the heat produced by said elements, as better described in the claims, which are an integral part of this description.

Further aims and advantages of the present invention will be clear from the following detailed description of an embodiment of the same and from the enclosed drawings, provided purely as an explanation without limitation, in which:
figures 1 and 2 show respectively a side view and a three-dimensional view of the cabinet in the present invention in the configuration with the resistors arranged on three layers;
figure 3 shows a side view of the cabinet in the configuration with the resistors arranged on five layers;
figure 4 shows a schematic side view of the cabinet indicating the lines of the flow of cooling fluid.
Figures 5 and 6 show two variants for realising the details of the cabinet, in a schematic side view.

The same numbers and the same reference letters identify the same components in the figures.

In accordance with the concept on which the invention is based, each layer of resistors must be able to be crossed by the flow of air triggered by the convective movement coming directly from outside without being struck by the air heated by passing through the layer below. The flow of air is channelled in such a way as not to pass through the following layers of resistors and in such a way as always to maintain a strong vertical component of movement to minimise the opposition to movement of the fluid caused by the structure of the cabinet, the transit time of the fluid and the processes of heat exchange with the thermally inactive components of the cabinet.

In this way every single layer of resistors has the possibility of generating the power that brings it to the limit temperature, depositing its own contribution of thermal power in the fluid inside the cabinet in the same conditions as the other layers, without the limitation imposed by a fluid inlet temperature that is raised by the contribution of power of the previous layers. Each layer of resistors has direct access to the outside air.

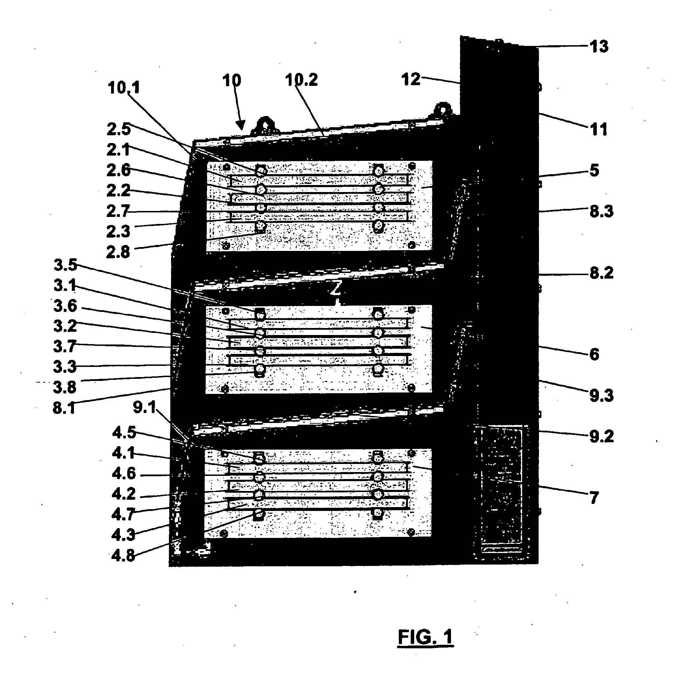

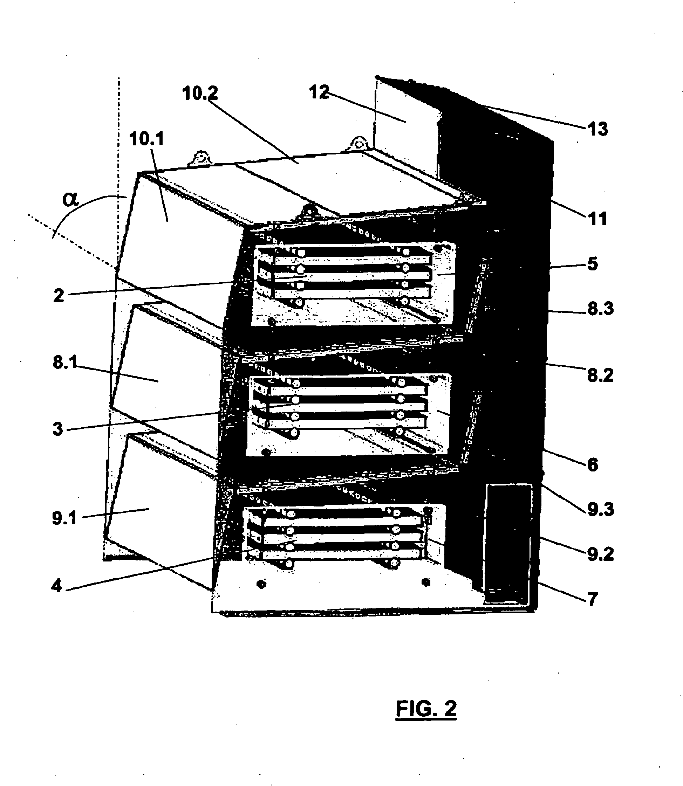

In figures 1 and 2, reference 1 indicates a cabinet for containing elements distributed inside it on three layers, in particular groups of electric resistors 2, 3 and 4, which during operation generate heat to be dissipated. The groups of resistors are composed for example of modules composed of metal strips, indicated respectively with 2.1, 2.2, 2.3; 3.1, 3.2, 3.3; 4.1, 4.2, 4.3, separated from one another by means of insulating spacers indicated respectively with 2.5, 2.6, 2.7, 2.8; 3.5, 3.6, 3.7, 3.8; 4.5, 4.6, 4.7, 4.8. The spaces between the resistor strips allow the passage of the cooling fluid with high efficiency.

There are anchoring systems 5, 6 and 7 for supporting the groups of resistors.

The three groups of resistors form three levels separated by dividing panel elements with a determined inclination such as to rise towards the rear of the cabinet. The separating panel elements between the levels include a front part 8.1, 9.1, an internal central part 8.2, 9.2, and an internal rear part 8.3, 9.3.

The cover 10 of the cabinet also performs the same function as the dividing elements, and it is provided with a front part 10.1 and a central part 10.2 having the same inclinations as those of the dividing panels. In the rear of the cabinet there is a hollow area 11 which acts as a flue, at the top end of which there is an opening 12 covered by a top protection 13. The rear ends of the internal rear parts 8.3, 9.3 of the dividing panel elements and of the central part of the cover 10.2 converge in the flue 11.

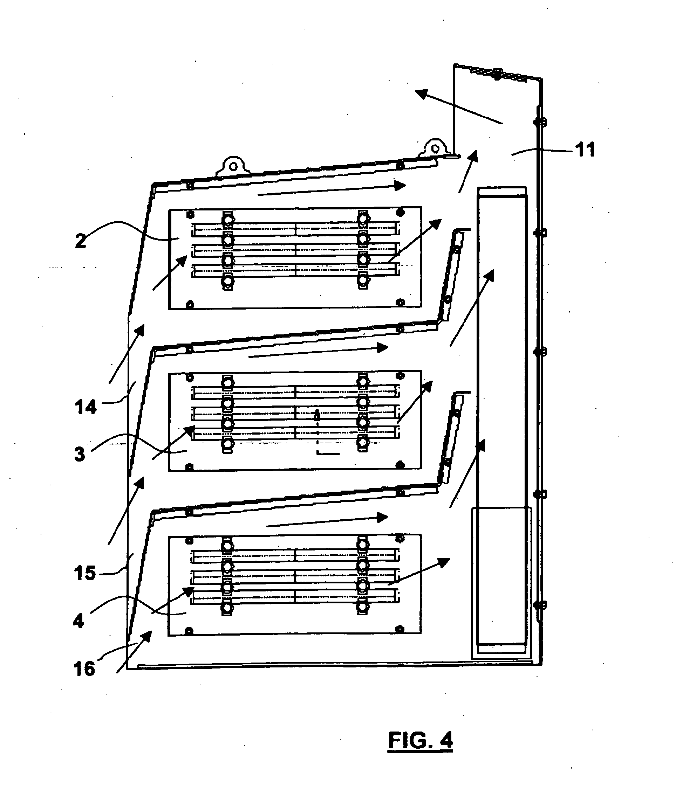

Figure 4 shows the flow lines of the cooling fluid. The front parts of the cover and of the dividing panel elements are separated from one another, forming slots 14, 15 and 16 through which the cooling fluid enters and passes between the strips of the resistors 2, 3, 4. The dividing elements between the layers, composed of the central areas of the panel elements, determine the conveying of the air flow towards the flue 11 at the back, so as to pass only through the respective layer and not invade the other layers. The rear parts of the panel elements help the respective air flows enter the flue 11 directly and thus reach the outside environment through the opening 12 at the top of the cabinet.

Advantageously the front and rear parts of the panels have a larger angle than the central part. In any case the inclination of all the parts of the panel elements and the surface finishing guarantee the correct flow of the air.

The panels and the covers may be made of a material suited to maintain its properties, in particular its mechanical strength and durability, when exposed to the relatively high temperature of the air that passes over them. Depending on the temperature to which they are exposed, they may be made of metals such as aluminium, galvanised plate, stainless steel or, if the temperature allows it, reinforced or non reinforced plastics.

In figure 2 it is possible to see a three-dimensional view of the conformation of the cabinet in a configuration that is able to achieve a degree of protection as defined according to standard IEC 529:1989-11, IP23. The front parts of the panelling (8.1, 9.1, 10.1) are suited to prevent the entry of rain at an angle α of up to 60° with respect to the vertical, so that the rain does not come in contact with the resistors. Moreover, on the outside profile of the cabinet there is no hollow where rainwater could be trapped or condensation could accumulate.

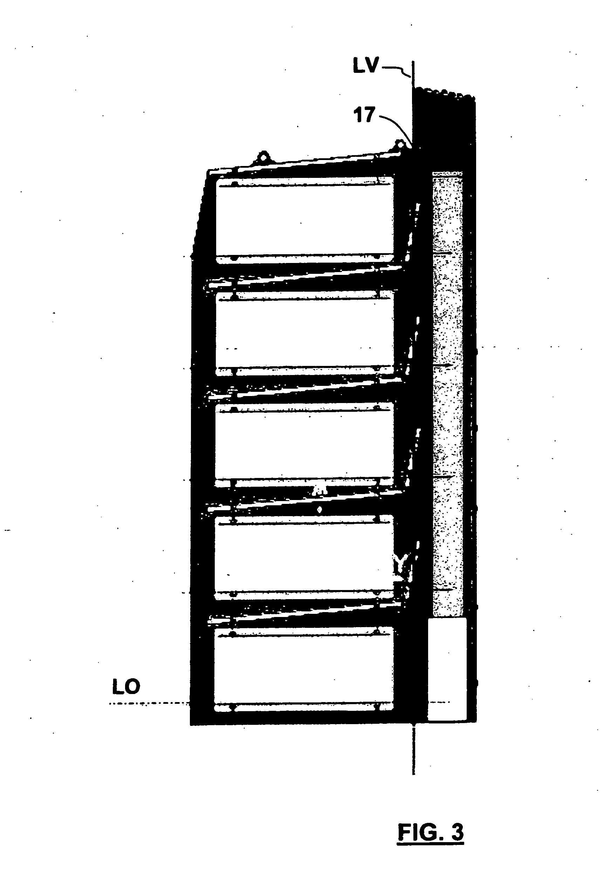

Figure 3 shows a possible variation extended to a system of 5 layers.

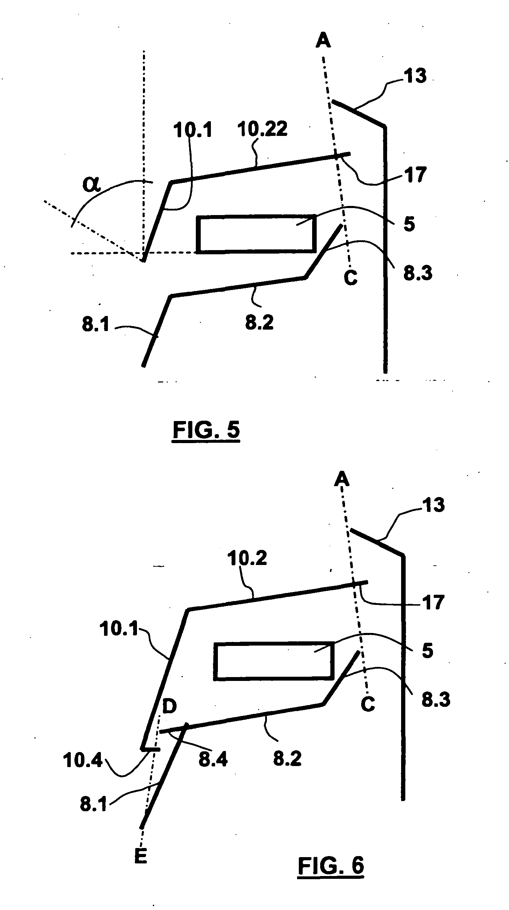

In order to achieve a degree of protection as defined by standard IEC 529:1989-11 IP23, for example the horizontal lines LO show how the bottom edges of the front panels are at a height that is the same as or lower than the height of the resistive elements, to intercept the water arriving with an inclination of up to 60° with respect to the vertical. Moreover the vertical line LV shows the overlapping of the top panel on the cover of the flue on the inside edge 17, to prevent the access of water to the volumes in which the resistors are enclosed.
In greater detail, in figure 5, the bottom edge of the air inlet panel 10.1 is lower than the height of the resistor. The height of the opening between two successive front parts (10.1 and 8.1) is less than a minimum height considered safe to prevent access to dangerous components: for example it is less than 12 mm, to prevent the entrance of a sphere with diameter 12 mm.
In the opening between the two successive front parts, there may be interposed means suited to prevent access to dangerous components, for example by inserting a mesh.
The cover of the outlet flue 13 in point A prevents access along the line B-C which is intercepted by the end point 17 of the top panel 10.2.

To achieve the performances indicated by standard IEC 529:1989-11 IP44, it is necessary to form a labyrinth also at the front air inlets between one panel and the other, introducing a lip 10.4 on the front panel and another lip 8.4 on the central panel as shown in figure 6. The front panel 10.1 and the central panel 8.2 form a labyrinth in such a way that the line D-E is intercepted by the lip which ends at B.
The outlet flue 13 is similar to the version in figure 5. The line A-C is intercepted by the panel which ends at point 17.
The cabinet offers degree of protection IP 44 irrespective of the dimensions of the inlet or outlet ports.

Summarising, the main characteristics of the cabinet are: the air flow which passes through each layer of resistors does not pass through the others; the flow is guided, always keeping a substantial component in the vertical direction; the warm flow going out is channelled into a flue.

Moreover some dimensions of the panels necessary for guiding the flow are also functional for achieving a high degree of protection. In particular a labyrinth is developed such as to prevent the direct access of water respectively according to degree of protection IP23 and IP44.

None of the panels or lips catches water or prevents the water and/or humidity from flowing downward, away from the resistors.

It is clear that the example with three layers described above is to be considered without limitation, and that it is possible to realise the invention with any number of layers.

## Claims

1. Cabinet for containing two or more *elements arranged on several layers* (2, 3, 4) which generate heat to be dissipated, in particular electric resistors, comprising dividing elements (8, 9, 10) between said layers suited to channel flows of cooling fluid so that each layer (2, 3, 4) is crossed by the flow of air triggered by the convective movement coming directly from outside *through slots (14,15,16)* without being struck by the air heated as it passes through the layer below; *a hollow area in the form of a flue (11;13) on the side opposite of said slots (14, 15, 16), said dividing elements (8, 9,10) conveying said flows of fluid from said slots (14, 15, 16) to and through said flue (11;13); the cabinet being **characterized in that** one (10) of said dividing elements (8, 9,10) is arranged on the top* of *said cabinet to define and form a cover (10) element.*

2. Cabinet as in claim 1, **characterised in that** said cover (10) comprises a front part (10.1), adapted to cooperate with correspondent front parts (8.1, 9.1) of said other dividing elements (8,9) so as to prevent the direct access of rain according to a determined angle of maximum incidence.

3. Cabinet as in claim 2, **characterised in that** said angle of maximum incidence is 60° with respect to the vertical.

4. Cabinet as in any claims 1 to 3, **characterised in that** said cover (10) comprises a front part (10.1), adapted to cooperate with correspondent front parts (8.1, 9.1) of said other dividing elements (8,9) through lip means (10.4, 8.4) provided respectively on said front part of the cover (10.1) and on said front parts (8.1, 9.1) of said other dividing elements (89) to form a labyrinth at the front air inlets.

5. Cabinet as in any claims 2 to 4, **characterised in that** the height of the opening between two successive said front parts (10.1,8.1,9.1) is less than a minimum height considered safe to prevent access to dangerous components, for example 12 mm.

6. Cabinet as in any claims 2 to 4, **characterised in that**, in the opening between two successive said front parts (10.1,8.1,9.1), there are inserted means suited to prevent access to dangerous components, said means comprising a mesh.

7. Cabinet as in any one of the previous claims, **characterised in that** said one or more elements arranged on layers (2, 3, 4) which generate heat to be dissipated comprise groups of electric resistors with modules of strips composed of metal strips (2.1, 2.2, 2.3; 3.1, 3.2, 3.3; 4.1, 4.2, 4.3), separated from one another by means of insulating spacers (2.5, 2.6, 2.7, 2.8; 3.5, 3.6, 3.7, 3.8; 4.5, 4.6, 4.7, 4.8), such that the passage of cooling fluid is allowed through the spaces of said modules.

## Patentansprüche

1. Schrank zur Unterbringung von zwei oder mehr als zwei auf mehreren Etagen (2, 3, 4) angeordneten elektrischen Bauelementen, insbesondere von elektrischen Widerständen, welche Wärme erzeugen, die abgeführt werden muss, wobei dieser Schrank umfasst:
trennende Elemente (8, 9, 10), welche zwischen den genannten Etagen angeordnet sind und
welche geeignet sind, Ströme eines kühlenden Mediums dergestalt zu kanalisieren, dass jede Etage (2, 3, 4) von dem durch die konvektive Bewegung getriggerten Luftstrom durchströmt wird, der durch Schlitze (14, 15, 16) direkt von außen kommt, ohne dass dieser von der Luft getroffen wird, die erwärmt wird, wenn sie durch die darunter befindliche Etage tritt;
ein hohler Bereich in Form eines Abzugskanals (11, 13) auf der den Schlitzen (14, 15, 16) gegenüber liegenden Seite, wobei die genannten trennenden Elemente (8, 9, 10) die genannten Ströme des Mediums von den genannten Schlitzen (14, 15, 16) zu dem und durch den genannten Abzugskanal (11, 13) befördern,
wobei dieser Schrank **dadurch gekennzeichnet ist, dass** eines (10) der genannten trennenden Elemente (8, 9, 10) an der Oberseite des genannten Schrankes angeordnet ist, um ein Abdeckelement (10) festzulegen und zu bilden.

2. Schrank nach Anspruch 1, **dadurch gekennzeichnet, dass** die genannte Abdeckung (10) ein vorderes Teil (10.1) umfasst, welches dergestalt ausgelegt ist, dass es mit den entsprechenden vorderen Teilen (8.1, 9.1) der genannten anderen trennenden Elemente (8, 9) dergestalt zusammenwirkt, dass das direkte Eindringen von Regen entsprechend einem festgelegten Winkel des maximalen Auftreffens verhindert wird.

3. Schrank nach Anspruch 3, **dadurch gekennzeichnet dass** der genannte Winkel des maximalen Auftreffens 60° in Bezug auf die Vertikale beträgt.

4. Schrank nach irgend einem der Ansprüche 1 bis 3, **dadurch gekennzeichnet, dass** die genannte Abdeckung (10) ein vorderes Teil (10.1) umfasst, welches dergestalt ausgelegt ist, dass es mit den entsprechenden vorderen Teilen (8.1, 9.1) der genannten anderen trennenden Elemente (8, 9) über lippenförmige Mittel (10.4, 8.4) zusammenwirkt, welche an dem genannten vorderen Teil der Abdeckung (10.1) und an den genannten vorderen Teilen (8.1, 9.1) der genannten anderen trennenden Elemente (8, 9) vorhanden sind, so dass an den vorderen Lufteintrittsstellen ein Labyrinth gebildet wird.

5. Schrank nach irgend einem der Ansprüche 2 bis 4, **dadurch gekennzeichnet, dass** die Höhe der Öffnung zwischen den aufeinanderfolgenden vorderen Teilen (10.1, 8.1, 9.1) geringer ist als eine Mindesthöhe wie beispielsweise 12 mm, welche als sicher betrachtet wird, um den Zugang zu gefährlichen Bestandteilen zu verhindern.

6. Schrank nach irgend einem der Ansprüche 2 bis 4, **dadurch gekennzeichnet, dass** in der Öffnung zwischen den genannten aufeinanderfolgenden vorderen Teilen (10.1, 8.1, 91) Mittel eingesetzt wind, welche geeignet sind, den Zugang zu gefährlichen Bestandteilen zu verhindern, wobei die genannten Mittel ein gitter- bzw. siebförmiges Material umfassen.

7. Schrank nach irgend einem der vorangehenden Ansprüche, **dadurch gekennzeichnet, dass** das eine oder die mehreren auf Etagen (2, 3, 4) angeordneten elektrischen Bauelemente, die Wärme erzeugen, welche abzuführen ist, Gruppen von elektrischen Widerständen mit Streifenmodulen umfassen, die aus Metallstreifen (2.1, 2.2, 2.3; 3.1, 3.2, 3.3; 4.1, 4.2, 4.3) bestehen, welche mit Hilfe von isolierenden Abstandsstücken (2.5, 2.6, 2.7, 2.8; 3.5, 3.6, 3.7, 3.8; 4.5, 4.6, 4.7, 4.8) dergestalt voneinander getrennt sind, dass der Durchgang von Kühlmittel durch die Räume der genannten Module ermöglicht wird.

## Revendications

1. Armoire destinée à contenir deux ou plusieurs éléments agencés sur plusieurs couches (2, 3, 4) qui produisent de la chaleur à dissiper, dans des résistances électriques particulières, comprenant des éléments de division (8, 9, 10) entre lesdites couches situés pour canaliser les écoulements d'un fluide de refroidissement de façon que chaque couche (2, 3, 4) soit croisée par l'écoulement d'air déclenché par le mouvement de convexion venant directement de l'extérieur à travers des fentes (14, 15, 16) sans être heurtée par l'air chauffé lorsqu'il passe à travers la couche en dessous; une zone creuse sous la forme d'un conduit (11; 13) sur le côté opposé desdites fentes (14, 15, 16), lesdits éléments de division (8, 9, 10) convoyant lesdits écoulements de fluide desdites fentes (14, 15, 16) à et à travers ledit conduit (11; 13); l'armoire étant **caractérisée en ce qu'**un (10) desdits éléments de division (8, 9, 10) est agencé sur le dessus de ladite armoire pour définir et former un élément de recouvrement (10).

2. Armoire selon la revendication 1, **caractérisée en ce que** ledit recouvrement (10) comprend une partie frontale (10.1) apte à coopérer avec des parties frontales correspondantes (8.1, 9.1) desdits autres éléments de division (8, 9) de manière à prévenir un accès direct de la pluie selon un angle déterminé d'incidence maximale.

3. Armoire selon la revendication 2, **caractérisée en ce que** ledit angle d'incidence maximale est de 60° relativement à la verticale.

4. Armoire selon l'une quelconque des revendications 1 à 3, **caractérisée en ce que** ledit recouvrement (10) comprend une partie frontale (10.1) apte à coopérer avec des parties frontales correspondantes (8.1, 9.1) desdits autres éléments de division (8, 9) par des moyens formant lèvre (10.4, 8.4) réalisés respectivement sur ladite partie frontale du recouvrement (10.1) et sur lesdites parties frontales (8.1, 9.1) desdits autres éléments de division (89) pour former un labyrinthe aux entrées d'air avant.

5. Armoire selon l'une quelconque des revendications 2 à 4, **caractérisée en ce que** la hauteur de l'ouverture entre deux desdites parties frontales successives (10.1, 8.1, 9.1) est inférieure à une hauteur minimale considérée comme étant sûre pour empêcher l'accès à des composants dangereux, par exemple elle est de 12 mm.

6. Armoire selon l'une quelconque des revendications précédentes 2 à 4, **caractérisée en ce que**, dans l'ouverture entre deux desdites parties frontales successives (10.1, 8.1, 9.1), il y a des moyens insérés aptes à prévenir l'accès à des composants dangereux, lesdits moyens comprenant une maille.

7. Armoire selon l'une quelconque des revendications précédentes, **caractérisée en ce que** lesdits un ou plusieurs éléments agencés sur des couches (2, 3, 4), qui produisent de la chaleur à dissiper, comprennent des groupes de résistances électriques avec des modules de bandes constitués de bandes métalliques (2.1, 2.2, 2.3; 3.1, 3.2, 3.3; 4.1, 4.2, 4.3) séparées les unes des autres par des pièces d'écartement isolantes (2,5, 2,6, 2,7, 2,8; 3,5, 3,6, 3,7, 3,8; 4,5, 4,6, 4,7, 4, 8), de sorte que le passage d'un fluide de refroidissement est permis à travers les espaces desdits modules.
